(19) Europäisches Patentamt
European Patent Office
Office européen des brevets

(11) Veröffentlichungsnummer: **0 432 505 A2**

(12) **EUROPÄISCHE PATENTANMELDUNG**

(21) Anmeldenummer: **90121855.2**

(51) Int. Cl.5 **C07F 9/6574**

(22) Anmeldetag: **15.11.90**

(30) Priorität: **09.12.89 DE 3940765**

(43) Veröffentlichungstag der Anmeldung:
**19.06.91 Patentblatt 91/25**

(84) Benannte Vertragsstaaten:
**BE CH DE FR GB IT LI NL SE**

(71) Anmelder: **HOECHST AKTIENGESELLSCHAFT**
**Postfach 80 03 20**
**W-6230 Frankfurt am Main 80(DE)**

(72) Erfinder: **Svara, Jürgen, Dr.**
**Mainstrasse 36**
**W-5000 Köln(DE)**

(54) **Verfahren zur Herstellung reiner cyclischer Phosphorsäurediarylester.**

(57) Zur Herstellung reiner cyclischer Phosphorsäurediarylester aus $POHal_3$ und einem Bis-phenolderivat oder einem Dihydroxy-dinaphthyl-Derivat setzt man $POHal_3$ in einem stöchiometrischen Überschuß von 0 bis 500 mol% ein und führt die Umsetzung in Gegenwart eines Katalysators bei Temperaturen von 50 bis 180 °C innerhalb eines Zeitraumes von 1 bis 24 Stunden durch. Nach der Umsetzung entfernt man überschüssiges $POHal_3$ und verdünnt mit 0,1 bis 10 g Eisessig pro g Reaktionsmischung. Die mit Eisessig verdünnte Reaktionsmischung hydrolysiert man mit 1 bis 4 mol Wasser, berechnet auf die umgesetzten Mole $POHal_3$, und filtriert die kristallin abgeschiedenen cyclischen Phosphorsäurediarylester ab.

EP 0 432 505 A2

## VERFAHREN ZUR HERSTELLUNG REINER CYCLISCHER PHOSPHORSÄUREDIARYLESTER

Die vorliegende Erfindung betrifft ein Verfahren zur Herstellung reiner cyclischer Phosphorsäurediarylester.

Cyclische Phosphorsäurediarylester werden in steigendem Maße als Stabilisatoren und Additive in Kunststoffen zur Verbesserung der Klarheit von Thermoplasten und als Farbstabilisatoren in photographische Systeme eingearbeitet.

Die hierfür eingesetzten cyclischen Phosphorsäurediarylester müssen in reinem,farblosem Zustand eingesetzt werden.

Cyclische Binaphthylphosphorsäureester oder Bisphenolphosphorsäureester können gemäß der DE-C-22 12 660 oder der EP-B-68 326 durch Einwirkung von $POCl_3$ auf die entsprechenden Binaphthyl-2,2'-diole oder Bisphenyl-2,2'-diole in Gegenwart von basischen Substanzen, insbesondere Pyridin, in stöchiometrischen Mengen als säurebindendes Mittel, hergestellt werden. Durch weitere Reinigungsschritte wird dann der cyclische Phosphorsäurediarylester in reiner Form isoliert.

Nachteilig hierbei ist die große einzusetzende Menge an säurebindenden Mitteln, die bei ihrer Wiederaufbereitung zu unerwünschten Abwässern führt.

Es war daher die Aufgabe gestellt, ein Verfahren zur Herstellung reiner cyclischer Phosphorsäurediarylester anzugeben, das mit hohen Ausbeuten und mit einer einfachen, wirtschaftlichen Weise arbeitet und bei dem keine unerwünschten Abwässer anfallen.

Es wurde nun ein einfaches Verfahren zur Herstellung reiner cyclischer Phosphorsäurediarylester aus $POHal_3$ und einem Bis-phenolderivat der Formel I

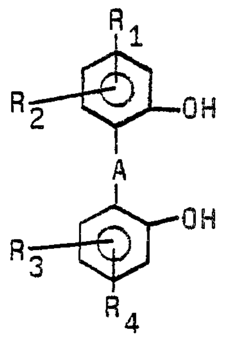

I

worin $R_1$ bis $R_4$ ein Alkyl mit 1 bis 18 C-Atomen, ein Arylrest mit 6 bis 10 C-Atomen, ein Arylalkyl mit 1 bis 3 C-Atomen in der Kette, Halogen oder H sein kann und worin A eine direkte C-C-Bindung oder eine Alkylidengruppe der Formel

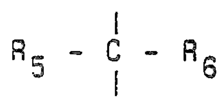

ist, worin $R_5$ und $R_6$ ein Alkyl mit 1 bis 12 C-Atomen, ein gegebenenfalls substituiertes cyclisches System mit insgesamt 5 bis 12 C-Atomen oder H sein kann,

oder aus einem Dihydroxy-dinaphthyl-Derivat der Formel II

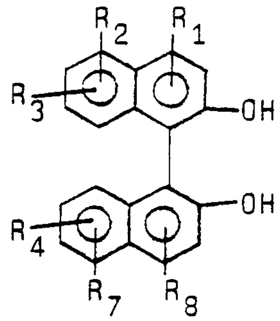

II

worin $R_1$ bis $R_4$, $R_7$ und $R_8$ ein Alkyl mit 1 bis 18 C-Atomen, Halogen oder H sein kann, gefunden, das dadurch gekennzeichnet ist, daß man

a) $POHal_3$ in einem stöchiometrischen Überschuß von 0 bis 500 mol% einsetzt,

b) die Umsetzung in Gegenwart eines Katalysators bei Temperaturen von 50 bis 180 °C innerhalb eines Zeitraumes von 1 bis 24 Stunden durchführt,

c) nach der Umsetzung überschüssiges $POHal_3$ entfernt,

d) mit 0,1 bis 10 g Eisessig pro g Reaktionsmischung verdünnt,

e) die mit Eisessig verdünnte Reaktionsmischung mit 1 bis 4 mol Wasser, berechnet auf die umgesetzten Mole $POHal_3$, hydrolysiert und

f) den kristallin abgeschiedenen cyclischen Phosphorsäurediarylester der Formel III

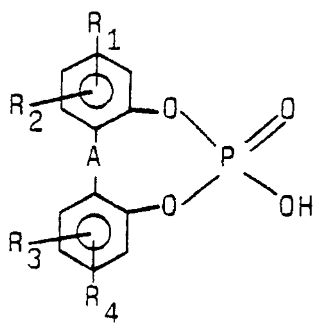

III

worin A, $R_1$, $R_2$, $R_3$, $R_4$, $R_5$ und $R_6$ die zu Formel I genannte Bedeutung haben, oder den cyclischen Phosphorsäurediarylester der Formel IV

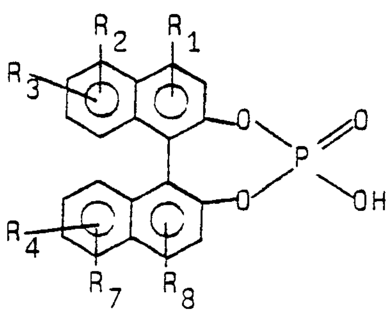

IV

worin $R_1$, $R_2$, $R_3$, $R_4$, $R_7$ und $R_8$ die zu Formel II genannte Bedeutung haben, abfiltriert.

Das erfindungsgemäße Verfahren kann weiterhin wahlweise auch noch dadurch ausgestaltet sein, daß man

aa) als $POHal_3$ $POCl_3$ oder $POBr_3$ einsetzt;

bb) als Katalysator Stickstoffbasen wie 4-Dimethylaminopyridin oder N,N-Dimethylformamid, phosphororganische Verbindungen wie Trioctylphosphanoxid oder Triphenylphosphanoxid, oder Metallchloride wie Aluminiumchlorid oder Magnesiumchlorid einsetzt;

cc) die Hydrolyse bei einer Temperatur von 10 bis 140 °C, insbesondere von 60 bis 120 °C, durchführt;

dd) den cyclischen Phosphorsäurediarylester nach der Abtrennung des Eisessigs bei Temperaturen von 40 bis 120 °C, insbesondere bei 100 °C, vorzugsweise bei Unterdruck zur Entfernung des restlichen

Eisessigs behandelt;
ee) den abgetrennten Eisessig durch Destillation aufarbeitet;
ff) die Reaktion unter einem Überdruck von bis zu 3 bar durchführt;
gg) 2,2'-Dihydroxi-1,1'-dinaphthyl (CAS-Nr. [602-09-5]) mit $POCl_3$ umsetzt;
hh) 2,2'-Dihydroxibiphenyl (CAS-Nr. [ 1806-27-7]) mit $POCl_3$ umsetzt.
ii) den cyclischen Phosphorsäurediarylester nach der Ab trennung des Eisessigs mit einem organischen Lösemittel, wie Aceton, Hexan oder Methanol, wäscht.

Mit dem erfindungsgemäßen Verfahren ist es nunmehr möglich, die den bekannten Verfahren anhaftenden Nachteile, wie beispielsweise die extraktive Nebenproduktabtrennung mittels großer Lösemittelmengen, Auftreten von Anbackungen, Ausbeuteverluste und die geringe Produktreinheit zu vermeiden.

Der Einsatz von Essigsäure bei der Hydrolyse hat sich dabei als besonders vorteilhaft herausgestellt, da in diesem Lösungsmittel die Edukte sehr gut, die Produkte aber im allgemeinen schwerer löslich sind und so direkt in kristalliner, gut filtrierbarer Form anfallen.

Besonders im Falle von 2,2'-Biphenylylenphosphorsäurechlorid (CAS-Nr. [52258-06-7]) hat sich der Einsatz von Essigsäure bei der Hydrolyse bewährt, weil das Endprodukt mit hoher Ausbeute und großer Reinheit kristallisiert, obwohl mit dem Rohstoff teerige Nebenprodukte, insbesondere Oxidationsprodukte des Phenols, in das Verfahren eingeschleppt werden.

Dieser Befund ist um so überraschender, als es bekannt war, daß

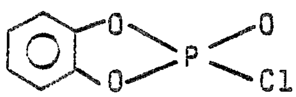

allein, d.h. ohne Zugabe von Wasser, unter Bildung von

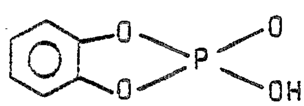

und Acetylchlorid reagiert, vgl. HOUBEN-WEYL: "Methoden der Organischen Chemie", E2, (1982), Seite 503.

Zur eindeutigen Charakterisierung sind für die einzelnen Komponenten auch die in Chemical Abstract genannten Registrier-Nummern (CAS-Nr.) angegeben.

Die erfindungsgemäßen cyclischen Phosphorsäurediarylester können in einem Lösemittel wie Wasser, Methanol oder Dioxan mit Alkalisalzen, insbesondere NaOH oder $Na_2CO_3$, in die entsprechenden Alkalisalze oder durch gasförmiges Ammoniak in das Ammoniumsalz überführt werden, wenn bei der Weiterverarbeitung die entsprechenden Salze eingesetzt werden müssen.

Erfindungsgemäß werden nur kleine Katalysatormengen eingesetzt. Gemäß dem Stand der Technik wird mit stöchiometrisch großen Mengen an säurebindenden Stoffen wie beispielsweise Pyridin in inerten Lösemitteln gearbeitet. Bei der Hydrolyse wird zunächst das Pyridinsalz des cyclischen Phosphorsäurediarylesters gebildet, welches dann durch eine entsprechende Fremdsäure neutralisiert werden muß und so zu einer unerwünschten Salzfracht im Abwasser führt.

Das erfindungsgemäße Verfahren wird durch die Beispiele weiter erläutert.

Vergleichsbeispiel 1

("Phosphorus and Sulfur", Gordon and Breach Science Publishers, Inc., USA, Band 8 (1980) Seite 144)

Zu einer Lösung von 35 g (0,23 mol) $POCl_3$ und 26 g (0,33 mol) Pyridin in 200 ml wasserfreiem Ether tropft man eine Lösung von 30 g (0,16 mol) 2,2'-Dihydroxibiphenyl (CAS-Nr. [1806-27-7]) in 200 ml wasserfreiem Ether. Nach Abfiltrieren des Pyridin-hydrochlorids wird das Lösungsmittel i. Vak. entfernt und der Rückstand aus Ligroin (100 - 125° C) umkristallisiert.
Ausbeute an 2,2'-Biphenylylenphosphorsäurechlorid: 90 % der Theorie.
Man versetzt eine Lösung von 10 g 2,2'-Biphenylylenphos phorsäurechlorid (CAS-Nr. [ 52258-06-7]) in 200 ml Wasser unter Rühren portionsweise mit 200 ml konz. Salzsäure. Die ausgefallene 2,2'-Biphenylylenphosphorsäure (CAS-Nr. [35227-84-0]) wird abfiltriert, mit konz. Salzsäure gewaschen und i.Vak. über KOH

getrocknet.
Ausbeute: 80 % der Theorie; Schmelzpunkt: 262 bis 263 °C unter Zersetzung.

Vergleichsbeispiel 2

93,1 g 2,2'-Dihydroxibiphenyl (CAS-Nr. [1806-27-7]) und 153,3 g $POCl_3$ werden mit 0,5 ml N,N-Dimetylformamid versetzt und 10 h unter Rückfluß im Sieden gehalten. Nicht umgesetztes $POCl_3$ wird im Wasserstrahlpumpenvakuum entfernt und der kristalline Rückstand in 200 ml Toluol aufgenommen.

Die Lösung wird unter intensivem Rühren in 1 l halbkonzentrierte HCl eingetropft. An der Phasengrenze wird ein Öl abgeschieden, das beim Erwärmen erstarrt und den Rührer blockiert. Durch Zerkleinern des Feststoffs, Filtrieren, Waschen und Trocknen gewinnt man 111 g braun gefärbtes Produkt (2,2'-Biphenylylenphosphorsäure (CAS-Nr.[35227-84-0]).
Ausbeute: 89,4 % der Theorie; Schmelzpunkt: 262 °C unter Zersetzung.

Beispiel 3

1464 g 2,2'-Dihydroxibiphenyl (CAS-Nr. [1806-27-7]) und 2412 g $POCl_3$ werden mit 0.5 g N,N'-Dimethylformamid 10 h unter Rückfluß im Sieden gehalten. Nach Abziehen des nicht umgesetzten $POCl_3$ im Wasserstrahlpumpenvakuum wird das Reaktionsgemisch bei 80 °C mit 1000 ml Eisessig versetzt und bei einer Temperatur von 80 °C innerhalb von 40 min unter Rühren 200 ml Wasser zugetropft. Unter HCl-Entwicklung scheidet sich kristalline 2,2'-Biphenylylenphosphorsäure (CAS-Nr. [35227-84-0]) aus. Nach dem Abkühlen auf Raumtemperatur wird der Kristallbrei abgenutscht, mit 2 x 200 ml Aceton gewaschen und getrocknet. Es werden 1864 g Kristalle erhalten.
Ausbeute: 95,5 % der Theorie; Schmelzpunkt: 273 °C (ohne Zersetzung).
$^{31}$P-NMR ($D_2O$) 5,6 ppm

Beispiel 4

Entsprechend Beispiel 3 werden 268 g 2,2'-Dihydroxi-1,1'-dinaphthyl (CAS-Nr. [602-09-5]), 550 g $POCl_3$ und 0,5 g N,N-Dimethylformamid umgesetzt.
Das Reaktionsgemisch wird mit 500 ml Eisessig versetzt und bei einer Temperatur von 75 °C innerhalb von 15 min unter Rühren 25 ml $H_2O$ zugetropft.
Es werden 234 g farblose Kristalle erhalten (Binaphthylylenphosphorsäure (CAS-Nr. [35193-63-6]).
Ausbeute: 72 % der Theorie; Schmelzpunkt: 202 °C.
$^{31}$P-NMR ($CDCl_3$) 10,8 ppm.

Beispiel 5

Entsprechend Beispiel 3 werden 138 g 3,3' ,5,5'-Tetra-tert.-butyl-2,2'-biphenyldiol (CAS-Nr. [6390-69-8]-), 130 g $POCl_3$ und 1 g Trioctylphosphanoxid umgesetzt. Das Reaktionsgemisch wird mit 150 ml Eisessig versetzt und bei einer Temperatur von 130 °C unter Druck innerhalb von 10 min unter Rühren mit 8,5 ml $H_2O$ versetzt.
Es werden 131 g farblose Kristalle erhalten (Cyclischer Phosphorsäurediarylester).
Ausbeute: 82,4 % der Theorie; Schmelzpunkt: 160 bis 170 °C.
$^{31}$P-NMR ($CDCl_3$)-1,1 ppm.

Beispiel 6

Entsprechend Beispiel 3 werden 100 g 2,2'-Methylen-bis(4-chlorphenol) (CAS-Nr. [97-23-4]), 171 g $POCl_3$ und 0,1 g N,N-Dimethylformamid umgesetzt.
Das Reaktionsgemisch wird mit 180 ml Eisessig versetzt. In die beim Rühren gebildete Suspension werden bei einer Temperatur von 70 °C innerhalb von 10 min 9 ml $H_2O$ zugetropft. Das abgenutschte Produkt wird anschließend in n-Hexan aufgeschlämmt. Nach Abnutschen und Trocknen werden 84 g Produkt erhalten (Cyclischer Phosphorsäurediarylester).
Ausbeute: 75,0 % der Theorie; Zersetzungspunkt: 290 °C.
$^{31}$P-NMR ($C_6D_6$) 13,6 ppm.

Beispiel 7

Entsprechend Beispiel 3 werden 100 g 2,2'-Methylen-bis(4-methyl-6-tert.-butylphenol) (CAS-Nr. [119-47-1]), 135 g $POCl_3$ und 0,2 g N,N-Dimethylformamid umgesetzt.
Das Reaktionsgemisch wird mit 60 ml Eisessig versetzt und bei einer Temperatur von 60 °C innerhalb von 10 min unter Rühren 6,5 ml $H_2O$ zugetropft.
Es werden 34 g farblose Kristalle erhalten (Cyclischer Phosphorsäurediarylester).
Ausbeute: 33 % der Theorie; Schmelzpunkt: 297 bis 301 °C.
$^{31}P$-NMR ($C_6D_6$) 12,1 ppm.

Beispiel 8

Entsprechend Beispiel 3 werden 123 g 2,2'-Methylen-bis(4,6-di-tert.-butylphenol) (CAS-Nr. [14362-12-0]-), 210 g $POBr_3$ und 0,5 g N,N-Dimethylformamid umgesetzt.
Das Reaktionsgemisch wird mit 150 ml Eisessig versetzt und bei einer Temperatur von 60 °C innerhalb von 10 min unter Rühren 8,5 ml $H_2O$ zugetropft.
Es werden 48 g farblose Kristalle erhalten (Cyclischer Phosphorsäurediarylester (CAS-Nr. [106396-29-6]).
Ausbeute: 34 % der Theorie; Schmelzpunkt: 272 bis 275 °C.
$^{31}P$-NMR ($C_6D_6$) 11,4 ppm.

## Ansprüche

**1.** Verfahren zur Herstellung reiner cyclischer Phosphorsäurediarylester aus $POHal_3$ und einem Bisphenolderivat der Formel I

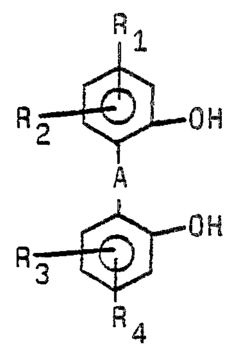

I

worin $R_1$ bis $R_4$ ein Alkyl mit 1 bis 18 C-Atomen, ein Arylrest mit 6 bis 10 C-Atomen, ein Arylalkyl mit 1 bis 3 C-Atomen in der Kette, Halogen oder H sein kann und worin A eine direkte C-C-Bindung oder eine Alkylidengruppe der Formel

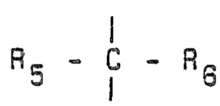

ist, worin $R_5$ und $R_6$ ein Alkyl mit 1 bis 12 C-Atomen, ein gegebenenfalls substituiertes cyclisches System mit insgesamt 5 bis 12 C-Atomen oder H sein kann,
oder einem Dihydroxy-dinaphthyl-Derivat der Formel II

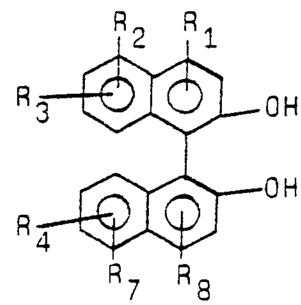

II

worin $R_1$ bis $R_4$, $R_7$ und $R_8$ ein Alkyl mit 1 bis 18 C-Atomen, Halogen oder H sein kann, dadurch gekennzeichnet, daß man

a) $POHal_3$ in einem stöchiometrischen Überschuß von 0 bis 500 mol% einsetzt,

b) die Umsetzung in Gegenwart eines Katalysators bei Temperaturen von 50 bis 180 °C innerhalb eines Zeitraumes von 1 bis 24 Stunden durchführt,

c) nach der Umsetzung überschüssiges $POHal_3$ entfernt,

d) mit 0,1 bis 10 g Eisessig pro g Reaktionsmischung verdünnt,

e) die mit Eisessig verdünnte Reaktionsmischung mit 1 bis 4 mol Wasser, berechnet auf die umgesetzten Mole $POHal_3$, hydrolysiert und

f) den kristallin abgeschiedenen cyclischen Phosphorsäurediarylester der Formel III

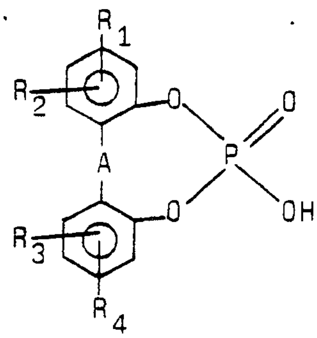

III

worin A, $R_1$, $R_2$, $R_3$, $R_4$, $R_5$ und $R_6$ die zu Formel I genannte Bedeutung haben, oder den cyclischen Phosphorsäurediarylester der Formel IV

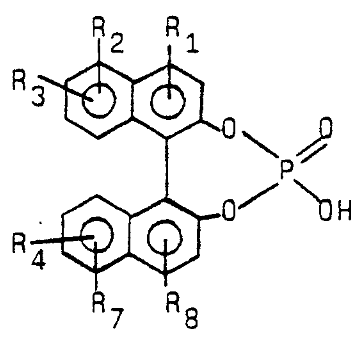

IV

worin $R_1$, $R_2$, $R_3$, $R_4$, $R_7$ und $R_8$ die zu Formel II genannte Bedeutung haben, abfiltriert.

2. Verfahren nach Anspruch 1, dadurch gekennzeichnet, daß man als $POHal_3$ $POCl_3$ oder $POBr_3$ einsetzt.

3. Verfahren nach Anspruch 1 oder 2, dadurch gekennzeichnet, daß man als Katalysator Stickstoffbasen wie 4-Dimethylaminopyridin oder N,N-Dimethylformamid, phosphororganische Verbindungen wie Trioctylphosphanoxid oder Triphenylphosphanoxid oder Metallchloride wie Aluminiumchlorid oder Magnesiumchlorid einsetzt.

4. Verfahren nach einem der Ansprüche 1 bis 3, dadurch gekennzeichnet, daß man die Hydrolyse bei einer Temperatur von 10 bis 140 °C, insbesondere von 60 bis 120 °C, durchführt.

5. Verfahren nach einem der Ansprüche 1 bis 4, dadurch gekennzeichnet, daß man den cyclischen Phosphorsäurediarylester nach der Abtrennung des Eisessigs bei Temperaturen von 40 bis 120 °C, insbesondere bei 100 °C, vorzugsweise bei Unterdruck zur Entfernung des restlichen Eisessigs behandelt.

6. Verfahren nach einem der Ansprüche 1 bis 5, dadurch gekennzeichnet, daß man den abgetrennten Eisessig durch Destillation aufarbeitet.

7. Verfahren nach einem der Ansprüche 1 bis 6, dadurch gekennzeichnet, daß man die Reaktion unter einem Überdruck von bis zu 3 bar durchführt.

8. Verfahren nach einem der Ansprüche 1 bis 7, dadurch gekennzeichnet, daß man 2,2'-Dihydroxy-1,1'-dinaphthyl mit $POCl_3$ umsetzt.

9. Verfahren nach einem der Ansprüche 1 bis 7, dadurch gekennzeichnet, daß man 2,2'-Dihydroxibiphenyl mit $POCl_3$ umsetzt.

10. Verfahren nach einem der Ansprüche 1 bis 9, dadurch gekennzeichnet, daß man den cyclischen Phosphorsäurediarylester nach der Abtrennung des Eisessigs mit einem organischen Lösemittel, wie Aceton, Hexan oder Methanol, wäscht.